# EUROPÄISCHE PATENTSCHRIFT

(11) **EP 1 735 887 B1**
(45) Veröffentlichungstag und Bekanntmachung des Hinweises auf die Patenterteilung: **20.05.2015**
(21) Anmeldenummer: 05706213.5
(22) Anmeldetag: 08.03.2005
(51) Int. Cl.: H02H 3/33, H02H 1/06

(54) **FEHLERSTROMSCHUTZSCHALTER**
FAULT-CURRENT CIRCUIT BREAKER
DISJONCTEUR DE COURANT DE FUITE

(30) Priorität: 05.04.2004 AT 5972004
(43) Veröffentlichungstag der Anmeldung: 27.12.2006
(73) Patentinhaber: Eaton Industries (Austria) GmbH, 3943 Schrems (AT)
(72) Erfinder: MAYER, Karl-Heinz, A-1210 Wien (AT)
(74) Vertreter: Eaton IP Group EMEA
(86) Internationale Anmeldenummer: PCT/AT2005/000076
(87) Internationale Veröffentlichungsnummer: WO 2005/099061

(56) Entgegenhaltungen:
- EP-A- 0 040 142
- EP-A- 1 322 017
- AT-B- 406 531
- DE-U- 29 501 280
- US-A1- 2003 161 165

## Beschreibung

Die Erfindung betrifft einen Fehlerstromschutzschalter gemäß dem Oberbegriff des Anspruches 1.

Ein solcher Fehlerstromschutzschalter wurde z.B. durch die AT 406 531 B bekannt. Bei diesem bekannten Fehlerstromschutzschalter ist die Differenzstrom- Auswerteschaltung über die Netzspannungsversorgung ständig mit Energie versorgt, solange die Hauptkontakte und damit auch die Hilfskontakte geschlossen sind. Dadurch ergibt sich jedoch der Nachteil eines entsprechenden Energieverbrauches des Fehlerstromschutzschalters. Dies führt auch dann zu Problemen, wenn mehrere Fehlerstromschutzschalter neben anderen elektrischen Schaltgeräten in einem Verteilergehäuse untergebracht sind. In diesem Fall kommt es aufgrund des relativ hohen Energieverbrauches der Fehlerstromschutzschalter zu einem entsprechenden Anstieg der Temperatur und damit auch zu einer Veränderung der Auslösewerte aufgrund der Temperaturdrift. Außerdem erhöht dieser Temperaturanstieg auch die Gefahr eines Ausbruchs eines Brandes.

Ziel der Erfindung ist es, diese Nachteile zu vermeiden und einen Fehlerstromschutzschalter der eingangs erwähnten Art vorzuschlagen, der sich durch einen geringen Energiebedarf auszeichnet.

Erfindungsgemäß wird dies bei einem Fehlerstromschutzschalters der eingangs erwähnten Art durch die kennzeichnenden Merkmale des Anspruches 1 erreicht.

Durch die vorgeschlagenen Maßnahmen ist sichergestellt, dass die erste Differenzstrom-Auswerteschaltung, die über den Arbeitsstromauslöser und das Schaltschloss auf die Hauptkontakte einwirkt, nur dann mit Energie versorgt wird, wenn die zweite Differenzstrom - Auswerteschaltung über den Schalter die Sekundär-Hilfskontakte geschlossen hat.

Dies tritt aufgrund der unterschiedlichen Ansprechempfindlichkeiten der Auswerteschaltungen nur dann ein, wenn der Differenzstromwandler einen Differenzstrom liefert, der einen bestimmten Schwellwert überschreitet, wobei dieser Schwellwert vorzugsweise um 60 - 90 % niedriger, insbesondere um 75 - 85% niedriger ist als der entsprechende Schwellwert des Differenzstromes, der zu einem Öffnen der Hauptkontakte über die erste Differenzstrom - Auswerteschaltung und den Arbeitsstromauslöser führt. Dies bedeutet, dass erst bei einem Überschreiten des Schwellwertes für die zweite Differenzstrom-Auswerteschaltung die erste Differenzstrom - Auswerteschaltung in Bereitschaft geht. Da die zweite Differenzstrom - Auswerteschaltung und der Schalter wesentlich weniger Energie für deren Betrieb erfordern, verglichen mit dem Energiebedarf der ersten Differenzstrom-Auswerteschaltung, ergibt sich eine erhebliche Verminderung des insgesamten Energieverbrauchs des erfindungsgemäßen Fehlerstromschutzschalters. Dadurch bedingt vermindert sich auch die Wärmeabstrahlung des Fehlerstromschutzschalters, was insbesondere bei in relativ kleinen Verteilergehäusen untergebrachten Schaltgeräten von Bedeutung ist.

Die zweite Differenzstrom- Auswerteschaltung kann dabei sehr einfach aufgebaut sein und z.B. im Wesentlichen durch einen einfachen Operationsverstärker gebildet sein, der lediglich mit Widerständen beschaltet ist.

Durch die kennzeichnenden Merkmale des Anspruches 3 ergibt sich der Vorteil einer in schaltungstechnischer Hinsicht sehr einfachen Lösung, bei der die zusätzliche Belastung des Differenzstromschalters gering bleibt.

Um den Energiebedarf des erfindungsgemäßen Fehlerstromschutzschalters besonders niedrig zu halten, ist es vorteilhaft die kennzeichnenden Merkmale des Anspruches 4 vorzusehen. Durch diese Maßnahmen ist auf einfache Weise sichergestellt, dass die Netzspannungsversorgung der ersten Differenzstrom- Auswerteschaltung dann wieder unterbrochen wird, wenn das Zeit-Stromintegral des Differenzstromes über eine bestimmte Zeit auf einen Wert unterhalb des Ansprechschwellwertes der ersten Differenzstrom-Auswerteschaltung bleibt bzw. einen solchen unterschreitet, was bedeutet, dass der vom Differenzstromwandler erfasste Differenzstrom keinen kritischen Verlauf nimmt und daher die Bereitschaft der ersten Differenzstrom- Auswerteschaltung wieder aufgehoben werden kann. In diesem Fall öffnen die Sekundär-Hilfskontakte und unterbrechen die wechselstromseitige Versorgung der Netzspannungsversorgung. Auf diese Weise lässt sich auch vermeiden, dass es z.B. bei an dem Fehlerstromschutzschalter angeschlossenen Geräten, die während bestimmter kurzer Betriebsphasen einen, wenn auch ungefährlichen erhöhten Fehlerstrom verursachen, zu einer ständigen Bereitschaft der ersten Differenzstrom-Auswerteschaltung kommt.

In diesem Zusammenhang können auch die Merkmale des Anspruches 5 vorgesehen sein. Durch diese Maßnahmen ist sichergestellt, dass die Betriebsbereitschaft der ersten Differenzstrom- Auswerteschaltung aufgehoben wird, sobald der erfasste Differenzstrom absinkt.

Nachstehend ist die Erfindung unter Bezugnahme auf die beigeschlossene Zeichnung, in welcher ein besonders bevorzugtes Ausführungsbeispiel dargestellt ist, näher beschrieben. Der erfindungsgemäße Fehlerstromschutzschalter ist in üblicher Weise mittels Klemmen an die Netzleiter (Außenleiter L1, L2 und L3, sowie Neutralleiter N) angeschlossen, wobei auch eine einphasige Ausführung für den Anschluss an einen Außenleiter L1 und den Neutralleiter möglich ist. Der Fehlerstromschutzschalter weist einen Differenzstromwandler 7 auf, dessen Primärwicklungen 7.1 an den Netzleitern L1, L2, L3 angeschlossen sind, bzw. diese selbst die Primärwicklungen darstellen. Die Sekundärwicklung 7.2 ist mit dem Eingang einer ersten Differenzstrom- Auswerteschaltung 6 und dem Eingang einer zweiten Differenzstrom-Auswerteschaltung 60 verbunden. Die Erfindung ist hierauf jedoch nicht beschränkt, vielmehr wäre es z.B. auch möglich für die zweite Differenzstrom- Auswerteschaltung 60 eine eigene Sekundärwicklung vorzusehen.

Weiters ist auch eine Prüfeinrichtung vorgesehen, die durch eine Taster-Widerstandskombination 9 gebildet ist, die an einen Außenleiter L1 und einen Hilfskontakt 23 angeschlossen ist, der mit dem Außenleiter L3 in Verbindung steht. Durch Drücken des Tasters, kommt es zu einer Überbrückung des Differenzstromwandlers 7 und damit zu einem von der Sekundärspule 7.2 des Differenzstromwandlers 7 erfassten Differenzstrom, der den Auslösewert des Fehlerstromwandlers überschreitet und zu einem Auslösen desselben führen soll.

An die erste Differenzstrom- Auswerteschaltung 6, die über Leitungen 18 mit einer Netzspannungsversorgung 2 verbunden und mit Gleichspannung versorgt ist, ist ein Arbeitsstromauslöser 3 z.B. ein Relais über Leitungen 19 angeschlossen. Dabei ist die Netzspannungsversorgung 2 durch eine Gleichrichterschaltung gebildet, die allpolig mit Netzspannung versorgbar ist.

Der Arbeitsstromauslöser 3 steuert über ein Schaltschloss 5 Hauptkontakte 10, die in die Außenleiter L1, L2, L3 und den Neutralleiter N eingeschleift sind. Mit den Hauptkontakten 10 sind Hilfskontakte 8 gekoppelt.

Zu diesen Hilfskontakten 8 sind Sekundär-Hilfskontakte 80 in Reihe geschaltet, an denen die Netzspannungsversorgung 2 wechselstromseitig angeschlossen ist. Diese Sekundär-Hilfskontakte 80 sind von einem Schalter 30 gesteuert, der an die zweite Differenzstrom-Auswerteschaltung 60 angeschlossen ist. Diese zweite Differenzstrom- Auswerteschaltung 60 ist über eine Gleichrichterschaltung 20 mit Gleichspannung versorgt, wobei die Gleichrichterschaltung 20 wechselstromseitig an die Verbindungen zwischen den Hilfskontakten 8 und den Sekundär-Hilfskontakten 80 angeschlossen ist.

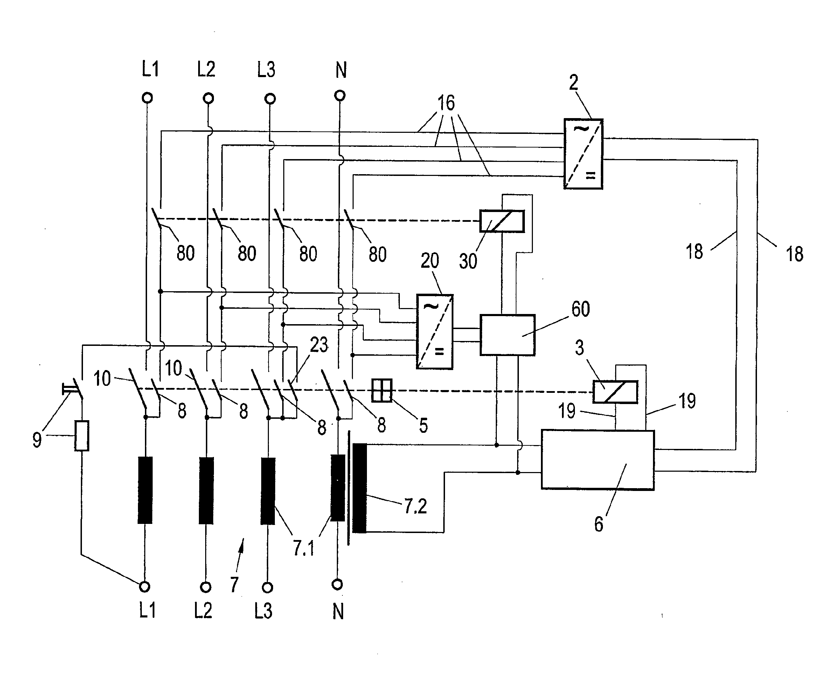

Bei der in der Zeichnung dargestellten Fehlerstromschutzschaltung sind Nutzseite und Lastseite frei wählbar. Ist die Netzseite an die Lastseite durchgeschaltet und die Hauptkontakte 10 und Hilfskontakte 8 geschlossen, ist nur die zweite Differenzstrom-Auswerteschaltung 60 mit Energie versorgt und daher betriebsbereit.

Die Ansprechempfindlichkeit der zweiten Differenzstrom- Auswerteschaltung 60 ist nunmehr derart gewählt, dass diese auf einen Differenzstrom anspricht der niedriger ist als jener auf welchen die erste Differenzstrom- Auswerteschaltung 6 ansprechen würde, vorzugsweise ist dieser um 60 - 90% kleiner, insbesondere um 75 - 85% kleiner als der Differenzstrom-Ansprechwert der ersten Differenzstrom- Auswerteschaltung 6. Beispielsweise beträgt der Differenzstrom Ansprechwert der zweiten Differenzstrom- Auswerteschaltung 5 mA jener der ersten 25 mA.

Erfasst nun die zweite Differenzstrom- Auswerteschaltung 60 einen über deren Ansprechwert liegenden Differenzstrom so aktiviert sie den Schalter 30, dieser schließt die Hilfskontakte 80, die Netzspannungsversorgung 2 liegt an Netzspannung und versorgt die erste Differenzstrom-Auswerteschaltung 6 mit Betriebsspannung, welche solcherart betriebsbereit geschaltet ist. Hiedurch wird erreicht, dass die erste Differenzstrom- Auswerteschaltung 6, welche der herkömmlichen Auslöseelektronik von Fehlerstromschaltern entspricht, nicht dauernd an Versorgungsspannung liegt, wodurch sich eine erhebliche insgesamte Energieeinsparung und damit auch eine geringere Wärmeabstrahlung des Fehlerstromschutzschalters ergibt.

So weist z.B. die zweite Differenzstrom- Auswerteschaltung 60 meist nur einen Energieverbrauch von z.B. 0,1 W, die erste Differenzstrom- Auswerteschaltung 6 meist hingegen einen solchen von 1 W bis 2W auf.

Die zweite Differenzstrom- Auswerteschaltung 60 kann sehr einfach aufgebaut z.B. ein einfacher Operationsverstärker sein, der lediglich mit Widerständen beschaltet ist. Bevorzugt ist der Differenzstrom- Ansprechwert einstellbar, was bei einem solchen Operationsverstärker besonders einfach realisiert werden kann.

Schaltet die zweite Differenzstrom- Auswerteschaltung 60 die erste Differenzstrom-Auswerteschaltung 6 betriebsbereit, so wird diese erst bei Erreichen ihres Differenzstrom-Ansprechwertes schalten. Um zu verhindern, dass die erste Differenzstrom-Auswerteschaltung 6 über eine vorbestimmbare Zeit hinaus betriebsbereit geschaltet ist, ohne dass sie anspricht ist es zweckmäßig wenn die zweite Differenzstrom- Auswerteschaltung 60 eine Schaltungsanordnung zur Bildung eines Zeit- Stromintegrals des Differenzstroms umfasst. Erreicht dieses Zeit- Stromintegral einen vorgebbaren bzw. einstellbaren Wert wird der Schalter 30 deaktiviert und durch Öffnen der Hilfskontakte 80 die Stromversorgung der ersten Differenzstrom- Auswerteschaltung 6 unterbrochen.

Zweckmäßig kann es auch sein, wenn die zweite Differenzstrom- Auswerteschaltung eine den Anstieg des Differenzstromes erfassende Schaltung aufweist, wobei im Falle eines negativen Anstiegs des Differenzstromes der Schalter 30 im Sinne eines Öffnens der Sekundär-Hilfskontakte 80 angesteuert wird.

Auch auf diese Weise ist es möglich die Bereitschaftszeiten der ersten Differenzstrom-Auswerteschaltung 6 nach dem Überschreiten eines vorgegebenen Schwellwertes des Differenzstromes und damit einer Aktivierung der ersten Differenzstrom- Auswerteschaltung 6 kurz zu halten, wenn der Differenzstrom für eine vorgegebene Zeit eine Tendenz zeigt, die keinen Anstieg über den Auslösewert der ersten Differenzstrom- Auswerteschaltung 6 erwarten lässt.

Es ist grundsätzlich auch möglich weitere Schaltungsgruppen vorzusehen. So ist es denkbar den Netzspannungsversorgungen 2 und 20 Überspannungsschutzschaltungen vorzuschalten, oder im Bereich des Differenzstromwandlers 7 einen Temperaturfühler anzuordnen, der mit der ersten Differenzstrom- Auswerteschaltung 6 verbunden ist.

## Patentansprüche

1. Fehlerstromschutzschalter mit einem Differenzstromwandler (7), einer vom Differenzstromwandler (7) angesteuerten netzspannungsabhängigen ersten Differenzstrom - Auswerteschaltung (6), die mit einem Arbeitsstromauslöser (3) verbunden ist, wobei der Arbeitsstromauslöser (3) über ein Schaltschloss (5) Hauptkontakte (10) in zu überwachenden Leitern (L1,L2,L3,N) betätigt, wobei die Netzspannungsversorgung (2) der Differenzstrom - Auswerteschaltung (6) und bzw. oder des Arbeitsstromauslösers (3) über mit den Hauptkontakten (10) gekoppelte Hilfskontakte (8) elektrisch trennbar mit wenigstens einem Leiter (L1,L2,L3,N) verbunden ist, **gekennzeichnet durch** eine zweite vom Differenzstromwandler (7) angesteuerte, netzspannungsabhängige Differenzstrom - Auswerteschaltung (60), wobei die Ansprechempfindlichkeiten der beiden Differenzstrom - Auswerteschaltungen derart unterschiedlich gewählt sind, dass die zweite Differenzstrom - Auswerteschaltung (60) auf einen, vorzugsweise einstellbaren, niedrigeren, vorzugsweise um 60 - 90 % niedrigeren, insbesondere um 75 - 85% niedrigeren, Differenzstrom anspricht als die erste Differenzstrom - Auswerteschaltung (6), und wobei die zweite Differenzstrom - Auswerteschaltung (60) über einen Schalter (30) weitere Sekundär-Hilfskontakte (80) öffnet bzw. schließt, die in Reihe zu den gemeinsam mit den Hauptkontakten (10) gesteuerten Hilfskontakten (8) geschaltet sind.

2. Fehlerstromschutzschalter gemäß Anspruch 1, **dadurch gekennzeichnet, dass** an die Sekundärspule (7.2) des Differenzstromwandlers (7) sowohl die erste als auch die zweite Differenzstrom - Auswerteschaltung angeschlossen ist.

3. Fehlerstromschutzschalter gemäß Anspruch 1 oder 2, **dadurch gekennzeichnet, dass** die zweite Differenzstrom - Auswerteschaltung (60) über eine separate Hilfs-Netzspannungsversorgung (20) versorgt ist, die zwischen dem, bzw. den Hilfskontakt(en) (8) und dem bzw. den Sekundär-Hilfskontakt(en) (80) wechselstromseitig angeschlossen ist, wobei der bzw. die Sekundär-Hilfskontakte (80) der Netzspannungsversorgung (2) der ersten Differenzstrom - Auswerteschaltung (6) unmittelbar vorgeschaltet ist bzw. sind.

4. Fehlerstromschutzschalter gemäß Anspruch 1, 2 oder 3, **dadurch gekennzeichnet, dass** die zweite Differenzstrom-Auswerteschaltung (60) eine Integrationsschaltung umfasst, wobei bei Erreichen eines vorgegebenen Wertes des Zeit-Stromintegrals des Differenzstromes der Schalter (30) deaktiviert wird und die Sekundär-Hilfskontakte (80) öffnet.

5. Fehlerstromschutzschalter gemäß einem der Ansprüche 1 bis 4, **dadurch gekennzeichnet, dass** die zweite Differenzstrom -Auswerteschaltung (60) eine den Anstieg des Differenzstromes erfassende Schaltung aufweist, wobei bei einem negativen Anstieg des Differenzstromes der Schalter (30) den bzw. die Sekundär-Hilfskontakt(e) (80) öffnet.

## Claims

1. A fault current circuit breaker with a differential current transformer (7), a first grid-current-dependent differential current evaluation circuit (6) controlled by the differential current transformer (7), which is connected with an operating-current trip (3), the operating-current trip (3) actuating main contacts (10) in monitored lines (L1,L2,L3,N) through a switching lock (5), whereby the grid power supply (2) of the differential current evaluation circuit (6) and/or the operating-current trip (3) is in separable electrical connection with at least one line (L1, L2, L3, N) through auxiliary contacts (8) coupled with the main contacts (10), **characterized by** a second grid-current-dependent differential current evaluation circuit (60) controlled by the differential current transformer (7), with different response sensitivities of the two differential current evaluation circuits being selected so that the second differential current evaluation circuit (60) responds at a preferably adjustable lower, preferably 60 - 90% lower, particularly 75 - 85% lower differential current than the first differential current evaluation circuit (6), and whereby the second differential current evaluation circuit (60) opens and closes, through a switch (30), additional secondary auxiliary contacts (80), which are connected in series with the auxiliary contacts (8) controlled along with the main contacts (10).

2. The fault current circuit breaker according to Claim 1, **characterized in that** both the first and the second differential current evaluation circuit are connected to the secondary coil (7.2) of the differential current transformer (7).

3. The fault current circuit breaker according to Claim 1 or 2, **characterized in that** the second differential current evaluation circuit (60) is supplied through a separate auxiliary grid power supply (20), which is connected between the auxiliary contact(s) (8) and the secondary auxiliary contact(s) (80) on the AC side, whereby the secondary auxiliary contact(s) (80) is/are connected immediately upstream of the grid power supply (2) of the first differential current evaluation circuit (6).

4. The fault current circuit breaker according to Claim 1, 2, or 3, **characterized in that** the second differential current evaluation circuit (60) includes an integrator circuit whereby, upon reaching a predefined value of the current-time integral of the differential current, the switch (30) is deactivated and opens the secondary auxiliary contacts (80).

5. The fault current circuit breaker according to one of Claims 1 through 4, **characterized in that** the second differential current evaluation circuit (60) has a circuit which detects the rise in the differential current whereby, in the event of a negative rise of the differential current, the switch (30) opens the secondary auxiliary contact(s) (80).

## Revendications

1. Disjoncteur à courant de défaut comportant un transformateur de courant différentiel (7), un premier circuit d'évaluation de courant différentiel (6) dépendant de la tension du réseau électrique commandé par le transformateur de courant différentiel (7), qui est raccordé à un déclencheur à courant de travail (3), le déclencheur à courant de travail (3) actionnant des contacts principaux (10) dans des lignes à surveiller (L1, L2, L3, N) au moyen d'un verrouillage de connexion (5), l'alimentation électrique de réseau (2) du circuit d'évaluation de courant différentiel (6) et/ou du déclencheur à courant de travail (3) étant raccordée à au moins une ligne (L1, L2, L3, N) en pouvant être électriquement coupée par des contacts auxiliaires (8) couplés aux contacts principaux (10), **caractérisé par** un second circuit d'évaluation de courant différentiel (60) dépendant de la tension du réseau électrique commandé par le transformateur de courant différentiel (7), différentes sensibilités de réponse des deux circuits d'évaluation de courant différentiel étant sélectionnées de telle sorte que le second circuit d'évaluation de courant différentiel (60) réponde à un courant différentiel inférieur, de préférence ajustable, de préférence inférieur de 60 à 90 %, en particulier inférieur de 75 à 85 %, à celui du premier circuit d'évaluation de courant différentiel (6), le second circuit d'évaluation de courant différentiel (60) ouvrant et fermant, au moyen d'un commutateur (30), d'autres contacts auxiliaires secondaires (80) qui sont connectés en série aux contacts auxiliaires (8) commandés conjointement aux contacts principaux (10).

2. Disjoncteur à courant de défaut selon la revendication 1, **caractérisé en ce que** le premier ainsi que le second circuit d'évaluation de courant différentiel sont raccordés à la bobine secondaire (7.2) du transformateur de courant différentiel (7).

3. Disjoncteur à courant de défaut selon la revendication 1 ou 2, **caractérisé en ce que** le second circuit d'évaluation de courant différentiel (60) est alimenté par une alimentation électrique de réseau auxiliaire distincte (20) qui est raccordée entre le ou les contacts auxiliaires (8) et le ou les contacts auxiliaires secondaires (80) côté courant alternatif, le ou les contacts auxiliaires secondaires (80) étant raccordés immédiatement en amont de l'alimentation électrique de réseau (2) du premier circuit d'évaluation de courant différentiel (6).

4. Disjoncteur à courant de défaut selon la revendication 1, 2 ou 3, **caractérisé en ce que** le second circuit d'évaluation de courant différentiel (60) comprend un circuit intégrateur moyennant quoi, lorsqu'on atteint une valeur prédéfinie de l'intégrale en fonction du temps du courant différentiel, le commutateur (30) est désactivé et ouvre les contacts auxiliaires secondaires (80).

5. Disjoncteur à courant de défaut selon l'une quelconque des revendications 1 à 4, **caractérisé en ce que** le second circuit d'évaluation de courant différentiel (60) comprend un circuit qui détecte l'augmentation du courant différentiel, moyennant quoi, en cas d'une augmentation négative du courant différentiel, le commutateur (30) ouvre le ou les contacts auxiliaires secondaires (80).
